Europäisches Patentamt

European Patent Office

Office européen des brevets

(11) Numéro de publication : **0 509 858 A1**

# (12) DEMANDE DE BREVET EUROPEEN

(21) Numéro de dépôt : 92400728.9

(22) Date de dépôt : 19.03.92

(51) Int. Cl.⁵ : **B41M 1/12, B41M 1/34, B41F 15/08**

(30) Priorité : 23.03.91 DE 4109709

(43) Date de publication de la demande :
**21.10.92 Bulletin 92/43**

(84) Etats contractants désignés :
**AT BE CH DE DK ES FR GB IT LI LU NL SE**

(71) Demandeur : **SAINT-GOBAIN VITRAGE INTERNATIONAL**
"Les Miroirs" 18, avenue d'Alsace
**F-92400 Courbevoie (FR)**
(84) **BE CH DK ES FR GB IT LI LU NL SE AT**

(71) Demandeur : **VEGLA VEREINIGTE GLASWERKE**
**Viktoriaallee 3-5**
**W-5100 Aachen (DE)**
(84) **DE**

(72) Inventeur : **Ohlenforst, Hans**
**Im Johannistal 7**
**W-5100 Aachen (DE)**
Inventeur : **Sauer, Gerd**
**Heinrich-Hamacher-Weg 11**
**W-5190 Stolberg (DE)**
Inventeur : **Balduin, Michael**
**Haupstrasse 18**
**W-5110 Alsdorf (DE)**

(74) Mandataire : **Muller, René et al**
**SAINT-GOBAIN RECHERCHE 39, quai Lucien Lefranc-BP 135**
**F-93303 Aubervilliers Cédex (FR)**

(54) **Procédé pour fabriquer un vitrage d'automobile comportant une couche décorative s'étendant exactement jusqu'à son bord périphérique.**

(57)    Pour fabriquer un vitrage d'automobile comportant une couche décorative s'étendant exactement jusqu'à son bord périphérique, on imprime sur une ébauche de vitrage (1) une couche décorative (8) dont les dimensions de surface extérieures sont plus grandes que les dimensions de surface extérieures de la couche décorative sur le vitrage final. La ligne de découpe (9) pour le vitrage final est tracée sur l'ébauche de vitrage imprimée (1), à l'intérieur de la couche décorative (8).

Fig. 2

EP 0 509 858 A1

La présente invention concerne un procédé pour fabriquer un vitrage d'automobile pourvu, au moins dans un domaine sélectionné, d'une couche décorative en une encre à cuire qui s'étend exactement jusqu'à la face périphérique du vitrage.

Des vitrages d'automobiles sont fréquemment pourvus, le long d'un bord ou de la totalité de leur pourtour, d'une couche décorative faite, en règle générale, d'une encre à cuire. La couche décorative a, entre autres, pour fonction de protéger contre les rayons UV la couche d'adhésif par laquelle les vitrages sont fixés dans le cadre. La sérigraphie s'est avérée particulièrement satisfaisante pour l'application de la couche décorative sur la surface du vitrage. L'encre sérigraphique est habituellement cuite à des températures de 550 à 600°C ou plus, au cours du traitement thermique nécessaire pour le bombage et/ou la trempe des vitrages.

Souvent, les vitrages, lorsqu'ils sont montés, ne sont plus garnis d'un encadrement en profilés enserrant leur bord ou le chevauchant, mais sont, au contraire, visibles de l'extérieur jusqu'à leur bord. Cela signifie que l'impression décorative marginale est également visible jusqu'au bord périphérique du vitrage. Des irrégularités de la limite extérieure de la couche décorative, en particulier des espacements légèrement différents entre la limite extérieure de la couche décorative et le bord du vitrage, peuvent s'avérer très gênantes. De plus, la protection de la couche d'adhésif contre les rayons UV n'est plus assurée dans les domaines qui ne sont pas revêtus de la couche décorative. C'est pourquoi, il est d'un grand intérêt d'appliquer la couche d'encre formant le cadre décoratif, par impression, dans des domaines sélectionnés ou le long de la totalité de la périphérie du vitrage, exactement jusqu'au bord périphérique de ce vitrage.

Dans les procédés d'impression traditionnels, en particulier en sérigraphie, il est, pour diverses raisons, difficile de réaliser une application précise de l'encre allant exactement jusqu'au bord du vitrage. D'une part, les vitrages présentent en effet, en règle générale, certaines tolérances dimensionnelles admissibles alors qu'ils sont tous imprimés à l'aide d'un seul et même écran sérigraphique. D'autre part, les opérations de positionnement des vitrages à imprimer et des outils d'impression sont également liées à des tolérances qui s'ajoutent, le cas échéant, aux tolérances dimensionnelles du vitrage. Lorsque la partie de l'écran qui laisse passer l'encre s'étend au-delà du bord du vitrage, l'encre adhère à ces endroits dans les mailles de l'écran ou à la face inférieure de ce dernier, ce qui donne des impressions maculées lors des opérations d'impression suivantes. Pour éviter cette difficulté, l'application de l'encre, en sérigraphie, ne s'effectue habituellement que jusqu'à une certaine distance du bord du vitrage, qui tient également compte du cas le plus défavorable.

Il est connu d'obtenir, par sérigraphie, une couche décorative s'étendant jusqu'au bord du vitrage, en adjoignant au vitrage des pochoirs complémentaires de la forme du vitrage et en procédant à l'application de l'encre au-delà du bord du vitrage jusque sur les surfaces des pochoirs qui sont ensuite enlevées du vitrage (document US-A 4 268 545). Lors de l'enlèvement des pochoirs du bord du vitrage, l'encre n'est cependant pas encore sèche et la face périphérique du vitrage peut être souillée. De plus, l'encre sérigraphique présente sur les pochoirs n'est pas encore sèche lors de l'opération d'impression suivante et passe sur la face inférieure de l'écran sérigraphique.

La présente invention a pour but de procurer un procédé convenant pour la fabrication en série de vitrages présentant un décor imprimé exactement jusqu'au bord des vitrages, qui soit indépendant des tolérances de surface inévitables des vitrages ainsi que de leurs tolérances de positionnement et de celles de l'écran sérigraphique, lors de l'opération d'impression.

Suivant le procédé de l'invention, une ébauche de vitrage présentant des dimensions de surface supérieures aux tolérances de surface finales du vitrage est imprimée au moyen de l'encre formant la couche décorative sur une surface dont les dimensions extérieures sont supérieures à celles de la surface de la couche décorative sur le vitrage final, mais inférieures à la surface de l'ébauche de vitrage, et la forme finale du vitrage, après l'opération d'impression, est découpée dans le vitrage pourvu de la couche décorative d'une manière telle que, dans les domaines dans lesquels la couche décorative doit s'étendre jusqu'à la face périphérique du vitrage, la ligne de découpe passe dans la surface imprimée.

Le procédé conforme à l'invention représente également un abandon du procédé courant jusqu'à présent selon lequel, initialement, la forme souhaitée du vitrage est découpée en substance dans une ébauche de vitrage, la plupart du temps rectangulaire, la face périphérique est soumise à un processus de rodage des bords, le vitrage est lavé, puis le cadre décoratif est imprimé par sérigraphie sur le vitrage présentant la forme finale. Au lieu de cela, suivant l'invention, on modifie l'ensemble de la séquence du procédé en lavant initialement et en imprimant l'ébauche de vitrage, puis en coupant le vitrage à la forme voulue et en rodant ses bords avant l'opération d'impression. Conformément à l'invention, les dimensions extérieures du champ décoratif à imprimer sont choisies plus grandes dans une mesure déterminée que les dimensions finales du champ décoratif, et ce, au moins d'autant plus grandes que, même dans le cas de l'addition la plus défavorable des tolérances du vitrage et des tolérances de positionnement de ce vitrage et de l'écran sérigraphique, le champ du vitrage destiné au cadre décoratif final soit entièrement recouvert d'encre sérigraphique. Par ailleurs, le champ imprimé sur l'ébauche de vitrage est en tout cas, même en tenant compte des tolérances de positionnement dans le poste d'impression, plus petit que l'ébauche de vitrage, de sorte que l'encre sérigraphique ne s'étend en aucun endroit jusqu'au bord périphérique de l'ébauche de vitrage.

Habituellement, pour la couche décorative, on utilise des encres à cuire qui conviennent pour la sérigraphie et qui fondent aux températures de bombage ou de trempe des vitrages, de 600 à 650°C, et s'unissent à la surface du verre. Ces encres à cuire sont séchées après l'opération d'impression pour éliminer le liquide véhiculaire, étant entendu que, selon la composition de l'encre, un séchage à chaud à une température de 70 à 80°C sous l'effet d'un rayonnement IR ou un séchage aux UV sous l'effet d'un rayonnement UV, est prévu.

Le procédé conforme à l'invention peut, par exemple, être conduit d'une façon telle qu'après l'opération d'impression, l'encre soit initialement séchée et que la découpe en forme du vitrage imprimé ne soit effectuée qu'après le séchage de l'encre. Cependant, il s'est avéré également possible de procéder à la découpe en forme du vitrage lorsque l'encre sérigraphique est humide et de ne sécher cette encre qu'après cette découpe.

Dans un développement avantageux de l'invention, après avoir procédé à la découpe de la forme finale du vitrage, c'est-à-dire après avoir cassé les bandes marginales situées à l'extérieur des lignes de découpe, et avant de roder les bords du vitrage, on durcit la couche décorative imprimée à une température de 200 à 300°C. Cette opération de durcissement supplémentaire précédant un rodage éventuel des bords permet de durcir la couche décorative au point que le vitrage, avec sa couche décorative, puisse traverser les laveuses habituelles après l'opération de rodage, sans que les couches décoratives qui ne sont pas encore cuites soient endommagées ou affectées défavorablement par le processus de lavage, en particulier par les brosses de lavage.

D'autres détails et avantages de l'invention ressortiront de la description suivante de divers exemples d'exécution du procédé de l'invention, donnée avec référence aux dessins annexés, dans lesquels :
   la Fig. 1 illustre une ébauche de vitrage pour un vitrage de toit de véhicule automobile comportant une couche décorative imprimée;
   la Fig. 2 illustre l'ébauche de vitrage de la Fig. 1 après traçage des lignes de découpe;
   la Fig. 3 illustre le vitrage pourvu du cadre décoratif et prêt au traitement ultérieur;
   la Fig. 4 illustre le dispositif de coupe convenant pour découper le vitrage imprimé, et
   la Fig. 5 illustre un autre dispositif de coupe convenant pour découper le vitrage imprimé.

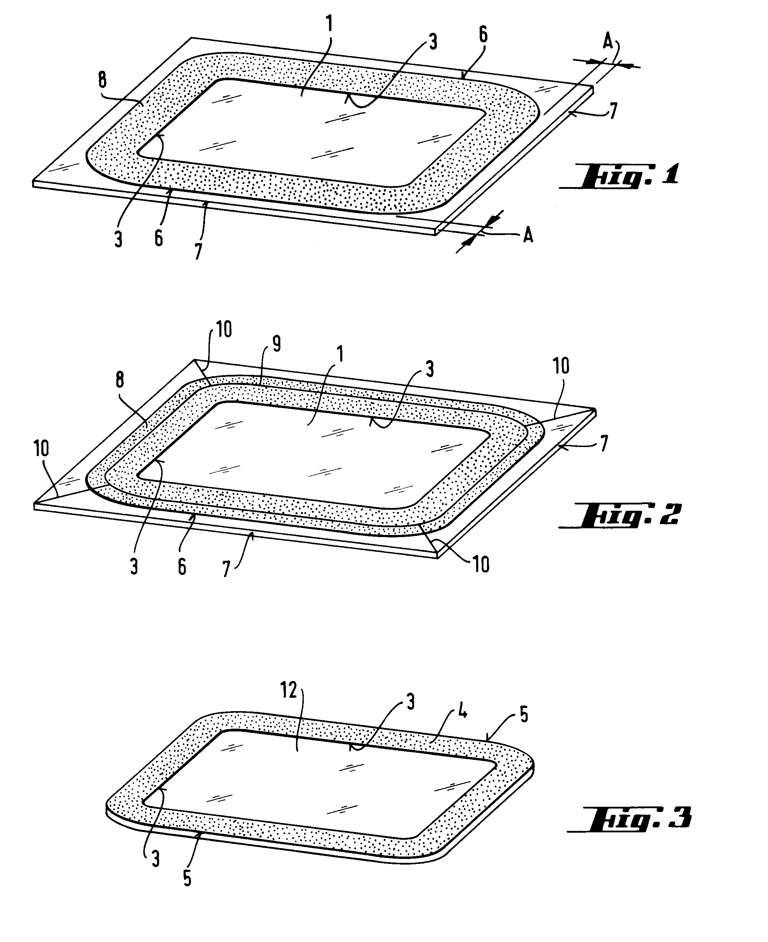

Les Fig. 1 à 3 illustrent la séquence de base du procédé de l'invention pour la fabrication d'un vitrage de toit de véhicule automobile en verre de sécurité trempé, qui est pourvu d'un cadre décoratif en une encre à cuire, s'étendant jusqu'au bord périphérique du vitrage.

Conformément au procédé traditionnel, une grande feuille de verre est initialement divisée en des vitrages rectangulaires plus petits 1. Ces vitrages 1 représentent les ébauches de vitrages à partir desquelles un vitrage de toit bombé en verre de sécurité trempé sera fabriqué. La grandeur des ébauches de vitrages 1 est choisie telle qu'une bande marginale de 2 à 5 cm de largeur subsiste à l'extérieur de la forme de vitrage souhaitée.

L'ébauche de vitrage 1 traverse une laveuse et est introduite dans un poste de sérigraphie dans lequel elle est positionnée en dessous de l'écran sérigraphique.

L'écran sérigraphique utilisé pour l'impression du cadre décoratif présente une surface d'impression que l'encre sérigraphique traverse et dont le contour intérieur correspond au contour intérieur 3 du cadre décoratif 4 sur le vitrage modèle terminé. Le contour extérieur de la surface d'impression est cependant plus grand, sur la totalité de la périphérie de la surface d'impression, que le contour extérieur 5 du cadre décoratif 4 du vitrage modèle terminé, et ce, de 5 à 10 mm sur le pourtour, c'est-à-dire qu'il est au moins d'autant plus grand que, même dans le cas le plus défavorable de l'addition de toutes les tolérances de surface et de positionnement, le modèle d'impression s'étende, en chaque endroit, jusqu'au-delà du contour extérieur de la forme de vitrage finale. Le contour extérieur 6 du pochoir est choisi tel, avec référence aux dimensions de surface de l'ébauche de vitrage 1, que, même en tenant compte du cas le plus défavorable des tolérances de surface et de positionnement, le modèle d'impression se termine à une distance A de la face périphérique 7 de l'ébauche de vitrage 1.

On exécute à présent l'opération sérigraphique de la manière habituelle, c'est-à-dire qu'on applique la couche décorative 8, faite d'une encre à cuire sérigraphique adequate, sur l'ébauche de vitrage 1. Ensuite, on découpe la forme finale du vitrage modèle dans l'ébauche de vitrage imprimée 1, en traçant la ligne de découpe 9 tout autour, dans la couche décorative. Après avoir tracé des lignes de découpe auxiliaires 10 dans les coins de l'ébauche de vitrage, on casse les bandes marginales situées à l'extérieur de la ligne de découpe 9 de la manière habituelle. On expose à présent le vitrage 12 ainsi pourvu d'un cadre décoratif 4 s'étendant sur toute sa périphérie, exactement jusqu'à son bord périphérique, pendant une période de quelques minutes, dans un four à une température de 250 à 300°C pour durcir la couche décorative. Ensuite, on rode la face périphérique du vitrage, puis on fait passer ce vitrage dans une laveuse usuelle. On soumet ensuite le vitrage de la manière habituelle à un traitement ultérieur au cours duquel il est chauffé dans un four continu à environ 650°C et est bombé, puis trempé par refroidissement brusque.

Le traitement de durcissement de la couche décorative à une température de 200 à 300°C doit avantageusement s'effectuer après la découpe et la casse des bandes marginales, car il s'est avéré que ce traitement thermique et le refroidissement suivant peuvent produire dans le vitrage des contraintes qui rendent difficiles une découpe ultérieure du vitrage.

Divers exemples de réalisation pour l'exécution du procédé seront décrits ci-après.

EXEMPLE 1.-

Une couche décorative 8 est imprimée sur une ébauche de vitrage rectangulaire telle que celle décrite avec référence à la Fig. 1. L'encre utilisée est une encre sérigraphique qui sèche sous l'effet de la chaleur. Après l'opération de sérigraphie, l'ébauche de vitrage traverse une gaine de chauffage dans laquelle l'encre est séchée à une température d'environ 70°C. L'ébauche de vitrage, avec la couche décorative 8 séchée, est à présent pourvue, dans une machine à découper les contours usuelle, sur sa surface imprimée, à l'intérieur de la couche décorative 8, d'une ligne de découpe de contour 9 et de lignes de découpe auxiliaires 10 dans les coins. Ensuite, les bandes marginales se trouvant à l'extérieur de la ligne de découpe 9 sont cassées. Suit alors un traitement de durcissement de la couche décorative au cours duquel le vitrage est chauffé pendant environ 5 minutes dans un four approprié à une température d'environ 250°C. La face périphérique du vitrage est rodée dans un poste de rodage suivant et le vitrage est ensuite passé à travers une laveuse. Le vitrage ainsi préparé est chauffé d'une manière connue dans un four continu à sa température de bombage à laquelle l'encre à cuire de la couche décorative fond et s'unit comme un émail ou une glaçure à la surface du verre. Le vitrage chauffé à la température de bombage est ensuite bombé à la forme voulue et est trempé par refroidissement brusque.

EXEMPLE 2.-

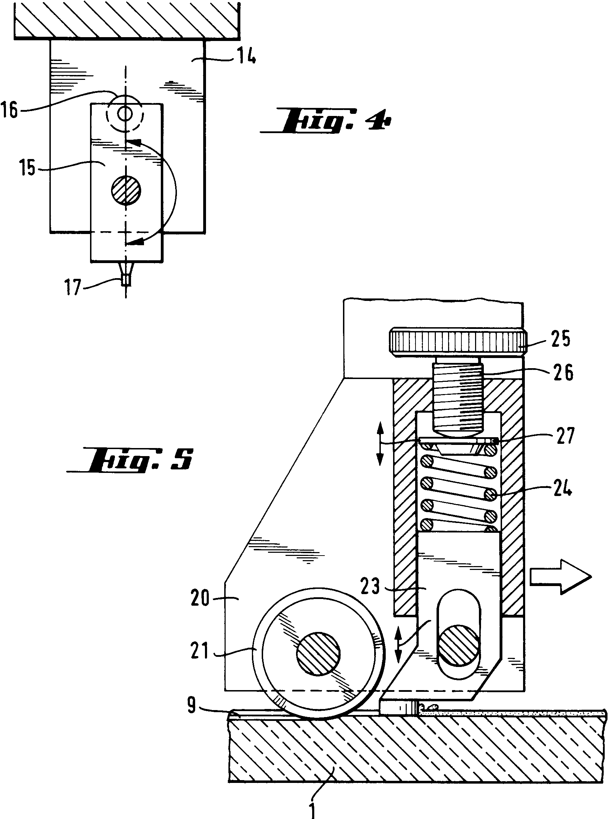

Comme décrit dans l'exemple 1, une couche décorative 8 en une encre sérigraphique durcissant à chaud est imprimée sur une ébauche de vitrage et cette couche décorative est séchée à une température d'environ 70°C. L'ébauche de vitrage, avec la couche décorative séchée, est ensuite amenée dans une machine à découper les contours. La tête de coupe 14 de la machine à découper les contours est, comme le montre la Fig. 4, pourvue d'un porte-molette 15 pouvant tourner de 180°, qui porte, à une extrémité la molette de découpe 16 et, à l'extrémité opposée à la molette de découpe 16, un doigt de raclage 17. A présent, un double passage de la tête de coupe 14 s'effectue suivant le trajet souhaité, chaque passage étant commandé par le même programme de cheminement. Lors du premier passage, le porte-molette 15 occupe la position dans laquelle le doigt de raclage 17 est en contact avec la surface de l'ébauche de vitrage. Le doigt de raclage 17 est guidé avec une certaine pression sur l'ébauche de vitrage et enlève, lors de son passage, la couche d'encre séchée. Après ce premier passage de la tête de coupe 14, cette tête est relevée, le porte-molette 15 est tourné de 180° et la tête de coupe est à nouveau abaissée. Lors du deuxième passage, la ligne de découpe est tracée. La manipulation et le traitement ultérieur du vitrage s'effectuent d'une manière correspondant à l'exemple 1.

EXEMPLE 3.-

Comme décrit dans l'exemple 1, une ébauche de vitrage est imprimée au moyen d'une encre sérigraphique durcissant à chaud et l'encre sérigraphique est séchée à une température d'environ 70°C. Ensuite, l'ébauche de vitrage, avec la couche décorative séchée, est amenée dans une machine à découper des contours. La tête de coupe de la machine à découper des contours est conçue, comme illustré sur la Fig. 5, c'est-à-dire que la tête de coupe 20 porte, d'une part, la molette de coupe 21 et, d'autre part, devant la molette de coupe 21, un doigt de raclage 22 sur un support 23. Le support 23 est monté coulissant dans le sens vertical et est repoussé par le ressort hélicoïdal 24 à force de pression réglable sur la surface du verre. La précontrainte du ressort hélicoïdal 24, c'est-à-dire la force de pression exercée par le ressort hélicoïdal 24, est réglée au moyen de la vis moletée 25 qui agit, par l'intermédiaire de la tige filetée 26 et de la rondelle 27, sur le ressort hélicoïdal 24. Cette tête de coupe remplit en même temps deux fonctions, c'est-à-dire qu'elle débarrasse le trajet de découpe de la couche décorative et qu'elle trace la ligne de découpe. Après le traçage de la ligne de découpe, la manipulation et le traitement ultérieur du vitrage s'effectuent comme dans l'exemple 1.

EXEMPLE 4.-

Une couche décorative 8 est imprimée sur une ébauche de vitrage telle que décrite dans l'exemple 1. Immédiatement après l'opération d'impression, l'ébauche de vitrage, avec la couche d'encre humide, est amenée dans un poste de découpe. Dans le poste de découpe, la ligne de découpe 9 est à présent tracée dans la couche d'encre humide, de même que les lignes de découpe auxiliaires 10. Les bandes marginales sont cassées et le vitrage est chauffé dans une gaine de chauffage à une température de 200 à 300°C, ce qui fait durcir la couche décorative. Le durcissement de la couche décorative est suivie du rodage de la face périphérique et des autres traitements ultérieurs du vitrage, comme décrit dans les exemples précédents.

## Revendications

1.- Procédé pour fabriquer un vitrage d'automobile pourvu, au moins dans un domaine sélectionné, d'une couche décorative en une encre à cuire qui s'étend exactement jusqu'à la face périphérique du vitrage, caractérisé en ce qu'une ébauche de vitrage présentant des dimensions de surface supérieures aux dimensions de surface finales du vitrage est imprimée au moyen d'une encre formant la couche décorative sur une surface dont les dimensions extérieures sont supérieures à celles de la surface de la couche décorative appliquée sur le vitrage final, mais inférieures à la surface de l'ébauche de vitrage, et que la forme finale du vitrage, après l'opération d'impression, est découpée dans le vitrage pourvu de la couche décorative d'une manière telle que, dans les domaines dans lesquels la couche décorative doit s'étendre jusqu'à la face périphérique du vitrage, la ligne de découpe passe dans la surface imprimée.

2.- Procédé suivant la revendication 1, caractérisé en ce qu'après la découpe de la forme finale du vitrage, c'est-à-dire après que les bandes marginales ont été cassées à l'extérieur des lignes de découpe et avant que les contours aient été rodés, la couche décorative imprimée est durcie à une température de 200 à 300°C.

3.- Procédé suivant la revendication 1 ou 2, caractérisé en ce qu'après l'impression de la couche décorative, l'encre est séchée et la ligne de découpe est tracée dans la couche d'encre séchée.

4.- Procédé suivant la revendication 1 ou 2, caractérisé en ce qu'après l'impression de la couche décorative, la ligne de découpe est tracée dans la couche d'encre encore humide.

5.- Procédé suivant l'une quelconque des revendications 1 à 4, caractérisé en ce qu'avant le traçage de la ligne de découpe, la couche d'encre est enlevée du trajet de la future ligne de découpe.

6.- Procédé suivant la revendication 5, caractérisé en ce que l'enlèvement de la couche d'encre le long du trajet de la future ligne de découpe s'effectue à l'intérieur de la machine à découper automatique à l'aide d'un doigt racleur qui est commandé par le même programme de cheminement que l'outil de coupe proprement dit.

7.- Procédé suivant l'une quelconque des revendications 1 à 6, caractérisé en ce que la couche décorative est imprimée par sérigraphie sur l'ébauche de vitrage.

8.- Dispositif pour l'exécution du procédé suivant la revendication 6, caractérisé par une tête de découpe (14) avec un porte-molette (15) pouvant pivoter d'un angle prédéterminé autour d'un axe horizontal, qui porte, à une extrémité, un doigt racleur (17) et, à l'autre extrémité, une molette de découpe (16) et qui peut être amené par pivotement autour de l'axe horizontal dans deux positions de travail.

9.- Dispositif pour l'exécution du procédé suivant la revendication 6, caractérisé par une tête de découpe (20) sur laquelle un doigt racleur (22) et une molette de découpe ( 21 ) sont montés l'un derrière l'autre dans le sens du déplacement.

Fig. 1

Fig. 2

Fig. 3

_Fig. 4_

16

15

17

14

_Fig. 5_

25

26

27

24

23

20

21

9

1

Office européen
des brevets

**RAPPORT DE RECHERCHE EUROPEENNE**

Numero de la demande

EP    92 40 0728

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | DE-A-4 020 972 (VEGLA VEREINIGTE GLASWERKE GMBH)<br>* le document en entier *<br>--- | 1,8 | B41M1/12<br>B41M1/34<br>B41F15/08 |
| D,A | US-A-4 268 545 (HODULIK)<br>* le document en entier *<br><br>----- | 1,8 | |

**DOMAINES TECHNIQUES RECHERCHES (Int. Cl.5 )**

B41F
B41M
C03C

Le présent rapport a été établi pour toutes les revendications

| Lieu de la recherche | Date d'achèvement de la recherche | Examinateur |
|---|---|---|
| LA HAYE | 27 JUILLET 1992 | MADSEN P. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                   
& : membre de la même famille, document correspondant

EPO FORM 1503 03.82 (P0402)